# EUROPÄISCHE PATENTSCHRIFT

(11) **EP 1 874 886 B1**
(45) Veröffentlichungstag und Bekanntmachung des Hinweises auf die Patenterteilung: **06.01.2010**
(21) Anmeldenummer: 06754771.1
(22) Anmeldetag: 20.04.2006
(51) Int. Cl.: C09K 3/18, C09K 5/10

(54) **VERWENDUNG VON AMPHOTEREN POLYMEREN ZUR BEHANDLUNG VON HARTEN OBERFLÄCHEN ZUR VERBESSUNG IHRER BENETZBARKEIT**
USE OF AMPHOTERIC POLYMERS FOR THE TREATMENT OF HARD SURFACES TO IMPROVE THE WETTABILITY THEREOF
UTILISATION DE POLYMERES AMPHOTERES POUR TRAITER DES SURFACES DURES, AFIN D'EN AMELIORER LA MOUILLABILITE

(30) Priorität: 21.04.2005 DE 102005018700
(43) Veröffentlichungstag der Anmeldung: 09.01.2008
(73) Patentinhaber: BASF SE, 67056 Ludwigshafen (DE)
(72) Erfinder: BECKER, Heike, 68163 Mannheim (DE); BRAIG, Volker, 69469 Weinheim-lützelsachsen (DE); HERRERA TABOADA, Lidcay, B-8400 Oostende (BE)
(86) Internationale Anmeldenummer: PCT/EP2006/061713
(87) Internationale Veröffentlichungsnummer: WO 2006/111564

(56) Entgegenhaltungen:
- EP-A- 0 248 185
- WO-A-01/05921

## Beschreibung

Die vorliegende Erfindung betrifft die Verwendung von amphoteren Polymeren zur Behandlung von harten Oberflächen zur Verbessung ihrer Benetzbarkeit mit polaren organischen Lösungsmitteln oder diese Lösungsmittel enthaltenden flüssigen Formulierungen.

Eine gute Benetzbarkeit von Oberflächen mit polaren organischen Lösungsmitteln oder flüssigen Formulierungen, die organische Lösungsmittel als wesentlichen, funktionellen Bestandteil enthalten, ist in vielen Bereichen wünschenswert.

Als wichtiges Beispiel sei die Enteisung von Verkehrsmitteln, z.B. von Flugzeugtragflächen und Sichtscheiben von Autos und Zügen, aber auch von Kühlelementen bei Wärmepumpen genannt, Insbesondere bei Flugzeugen ist eine vollständige Enteisung wesentlich, da ansonsten die Aerodynamik deutlich gestört wird, was wiederum zu Auftriebsverlusten führt, und weitere sicherheitsrelevante Funktionen des Flugzeugs beeinträchtigt werden. Als Enteisungsmittel werden üblicherweise Formulierungen eingesetzt, die als gefrierpunktserniedrigenden Zusatz mehrwertige Alkohole (vorzugsweise Ethylenglykol, 1,2- oder 1,3-Propylenglykol, Diethylenglykol, Dipropylenglykol und/oder Glycerin) zusammen mit Wasser und weiteren möglichen Hilfsstoffen, wie Tensiden, Emulgatoren und pH-Wertregulatoren, enthalten. Um die Haftung des Enteisungsmittels auf der zu behandelnden Oberfläche zu verbessern und das Abfließen des Enteisungsmittels von schiefen oder senkrechten Oberflächen zu hemmen, werden in der Regel Verdicker zugegeben (z.B. WO-A-98/10032, US-A-5 708 068). Hierdurch wird jedoch die Viskosität des Enteisungsmittels so weit erhöht, daß eine unzureichende Filmbildung und damit auch eine unzureichende Bedeckung der Oberfläche resultiert.

Der Erfindung lag daher die Aufgabe zugrunde, eine bessere Benetzbarkeit von Oberflächen mit polaren organischen Lösungsmitteln und so die Ausbildung von stabilen Lösungsmittelfilmen auf den Oberflächen zu ermöglichen.

Demgemäß wurde die Verwendung von amphoteren Polymeren zur Behandlung von harten Oberflächen zur Verbessung ihrer Benetzbarkeit mit polaren organischen Lösungsmitteln oder diese Lösungsmittel enthaltenden flüssigen Formulierungen gefunden.

Als amphotere Polymere eignen sich insbesondere Polymere, die protonierbare oder quaternisierte Stickstoffatome und anionische Gruppen enthalten.

Derartige Stickstoffatome können beispielsweise in Form von primären, sekundären oder tertiären Aminogruppen, d.h. substituiert mit einem, zwei bzw. drei Alkyl- und/oder Arylresten und entsprechend zwei, einem oder keinem Wasserstoffatom, oder quaternisiert vorliegen. In den quaternären Ammoniumgruppen können die Stickstoffatome ein bis vier Alkyl- und/oder Arylreste und entsprechend drei bis kein Wasserstoffatom als Substituenten aufweisen.

Als anionische Gruppen eignen sich insbesondere Carboxylatgruppen, aber auch alle weiteren anionischen Gruppen, die imn Gleichgewicht mit der entsprechenden protonierten, ungeladenen Gruppe stehen, z.B. Sulfonat-, Phosphonat- und Nitratgruppen.

Beispiele für geeignete amphotere Polymere sind die Umsetzungsprodukte von monoethylenisch ungesättigte Reste enthaltenden Ammoniumsalzen, wie Diallyldialkylammoniumchloriden, Trialkylammoniumalkylacrylaten, Acrylamiden, Polyalkylenpolyaminen, Polyamidoaminen und Polyetheraminen mit monoethylenisch ungesättigten Carbonsäuren, insbesondere Acrylsäure, die üblicherweise durch radikalische Copolymerisation oder im Fall der polymeren Amine durch polymeranaloge Reaktion hergestellt werden. Die Umsetzungsprodukte können zusätzlich nichtionischen Comonomeren entsprechende Bausteine enthalten.

Besonders geeignet sind Polymere auf Basis anionisch modifizierter Polyamine.

Eine Gruppe ganz besonders geeigneter Polymere sind wasserlösliche oder wasserdispergierbare Polymere, die erhältlich sind durch Umsetzung von
(a) Stickstoffatome enthaltenden Verbindungen, ausgewählt aus der Gruppe der Polyalkylenpolyamine, Polyamidoamine, mit Ethylenimin gepfropften Polyamidoamine und Polyetheramine,
(b) gewünschtenfalls mindestens bifunktionellen Vernetzern
   und
(c) freie oder derivatisierte Säuregruppen enthaltenden Verbindungen, ausgewählt aus der Gruppe der α,β-ungesättigten Carbonsäuren, ihrer Salze und ihrer hydrolysierbaren Derivate, der Halogencarbonsäuren, ihrer Salze und ihrer hydrolysierbaren Derivate, Glycidylsäure, ihrer Salze und ihrer hydrolysierbaren Derivate, der α,β-ungesättigten Sulfonsäuren, der α,β-ungesättigten Phosphonsäuren und der Carboxyalkylierungsmittel auf Basis von Aldehyden und Alkalimetallcyaniden,
   und Hydrolyse von in derivatisierter Form vorliegenden Säuregruppen zu freien oder als Salz vorliegenden Säuregruppen.

Derartige auf Carbonsäurederivaten (c) basierenden Polymere sind aus der nichtvorveröffentlichten WO-A-05/073357 bekannt und werden dort zur Behandlung harter Oberflächen zur schnellen und streifenfreien Auftrocknung, Erleichterung der Schmutzablösung, Verringerung oder Vermeidung der Kondensation von Wasser und/oder der Bildung eingetrockneter Wasserspuren auf den Oberflächen eingesetzt.

Durch Umsetzung mit Formaldehyd und Alkalimetallcyaniden carboxymethylierte Polymere werden in der WO-A-04/01099 offenbart und werden dort zur Passivierung, Beizung und Versiegelung von Metalloberflächen sowie bei der Metallabscheidung auf Metall- und Kunststoffoberflächen eingesetzt. In der nichtvorveröffentlichten DE-A-10 2004 044 605 wird ihre Verwendung zur Behandlung harter Oberflächen zur Verbesserung des Ablaufverhaltens von Wasser von den Oberflächen und zur Verringerung der Schmutz- und Salzablagerung auf den Oberflächen beschrieben.

Die erfindungsgemäß bevorzugten Polymere sind durch Umsetzung der Komponenten (a), gewünschtenfalls (b) und (c) zu erhalten. Sie können somit in vernetzter oder unvernetzter Form vorliegen, wobei die Komponente (a) in jedem Fall mit der Komponente (c) modifiziert wurde.

Dabei können die Komponenten (a), gewünschtenfalls (b) und (c) in beliebigen Verhältnissen zueinander eingesetzt werden. Falls die Komponente (b) eingesetzt wird, kommen die Komponenten (a) und (b) bevorzugt in einem molaren Verhältnis von 100 : 1 bis 1 : 1000, besonders bevorzugt von 20 : 1 bis 1 : 20, zum Einsatz. Das molare Verhältnis der Komponenten (a) und (c) wird bevorzugt so gewählt, daß das molare Verhältnis der Wasserstoffatome am Stickstoff in (a) zu der Komponente (c) 1 : 0,2 bis 1 : 0,95, bevorzugt 1 : 0,3 bis 1 : 0,9, besonders bevorzugt 1 : 0,4 bis 1 : 0,85, beträgt.

Ganz besonders bevorzugt handelt es sich bei den Polymeren um anvernetzte Polymere, d. h., bis zu 2%, bevorzugt bis zu 1,5%, besonders bevorzugt bis zu 1 %, der in der in der Komponente (a) enthaltenen aktiven N-H-Bindungen sind mit einem Vernetzer (b) umgesetzt.

Als Stickstoffatome enthaltende Komponente (a) dienen Polyalkylenpolyamine, Polyamidoamine, mit Ethylenimin gepfropfte Polyamidoamine oder Polyetheramine oder Mischungen dieser Verbindungen.

Unter dem Begriff Polyalkylenpolyamine sollen hier Verbindungen verstanden werden, die mindestens 3 Stickstoffatome enthalten, wie Diethylentriamin, Triethylentetramin, Tetraethylenpentamin, Pentaethylenhexamin, Diaminopropylenethylendiamin, Trisaminopropylamin und Polyethylenimine. Die Polyethylenimine haben vorzugsweise ein mittleres Molekulargewicht M_{w} von mindestens 300, bevorzugt von 800 bis 2 000 000, besonders bevorzugt von 20 000 bis 1 000 000, ganz besonders bevorzugt von 20 000 bis 750 000 (ermittelt über Lichtstreuung).

Die Polyalkylenpolyamine können partiell amidiert sein. Produkte dieser Art werden beispielsweise durch Reaktion von Polyalkylenpolyaminen mit Carbonsäuren, Carbonsäureestern, Carbonsäureanhydriden oder Carbonsäurehalogeniden hergestellt. Amidierte Polyalkylenpolyamine sind für die nachfolgenden Reaktionen vorzugsweise zu 1 bis 30%, besonderes bevorzugt bis zu 20%, jeweils bezogen auf die amidierbaren Stickstoffatome im Polyalkylenpolyamin, amidiert. Sie müssen noch freie NH-Gruppen aufweisen, damit sie mit den Verbindungen (b) und (c) umgesetzt werden können. Geeignete Carbonsäuren für die Amidierung der Polyalkylenpolyamine sind gesättigte und ungesättigte aliphatische oder aromatische Carbonsäuren mit in der Regel 1 bis 28 Kohlenstoffatomen, z.B. Ameisensäure, Essigsäure, Propionsäure, Benzoesäure, Laurinsäure, Palmitinsäure, Stearinsäure, Ölsäure, Linolsäure und Behensäure. Selbstverständlich ist auch eine Amidierung durch Umsetzung der Polyalkylenpolyamine mit Alkyldiketenen möglich.

Die Polyalkylenamine können außerdem in teilweise alkylierter Form als Komponente (a) eingesetzt werden. Als Alkylierungsmittel besonders geeignet sind Alkylhalogenide, z.B. Methylchlorid, Ethylchlorid, Butylchlorid, Epichlorhydrin und Hexylchlorid, Dialkylsulfate, z.B. Dimethylsulfat und Diethylsulfat, und Benzylchlorid. Falls alkylierte Polyalkylenpolyamine als Komponente (a) zum Einsatz kommen, beträgt ihr Alkylierungsgrad bevorzugt 1 bis 30%, besonders bevorzugt bis zu 20%.

Weitere geeignete modifizierte Polyalkylenamine sind die Umsetzungsprodukte von Polyethyleniminen mit C₂-C₂₂-Epoxiden. Diese Reaktionsprodukte werden üblicherweise durch Alkoxylierung von Polyethyleniminen in Gegenwart von Basen als Katalysator hergestellt.

Die ebenfalls als Komponente (a) geeigneten Polyamidoamine sind z.B. durch Umsetzung von C₄-C₁₀-Dicarbonsäuren mit Polyalkylenpolyaminen, die vorzugsweise 3 bis 10 basische Stickstoffatome im Molekül enthalten, erhältlich. Geeignete Dicarbonsäuren sind beispielsweise Bernsteinsäure, Maleinsäure, Adipinsäure, Glutarsäure, Korksäure, Sebacinsäure oder Terephthalsäure. Man kann auch Mischungen von Carbonsäuren einsetzen, z.B. Mischungen von Adipinsäure mit Glutarsäure oder Adipinsäure. Bevorzugt wird Adipinsäure zur Herstellung der Polyamidoamine eingesetzt. Geeignete Polyalkylenpolyamine, die mit den Dicarbonsäuren kondensiert werden, wurden bereits vorstehend genannt, z.B. sind Diethylentriamin, Trietyhlentetramin, Dipropylentriamin, Tripropylentetramin, Dihexamethylentriamin, Aminopropylethylendiamin und Bis(aminopropyl)ethylendiamin geeignet. Die Polyalkylenpolyamine können auch in Form von Mischungen bei der Herstellung der Polyamidoamine eingesetzt werden. Die Herstellung der Polyamidoamine erfolgt vorzugsweise in Substanz, kann jedoch auch gegebenenfalls in inerten Lösungsmitteln vorgenommen werden. Die Kondensation der Dicarbonsäuren mit den Polyalkylenpolyaminen erfolgt bei höheren Temperaturen, beispielsweise im Bereich von 120 bis 220°C. Das während der Reaktion gebildete Wasser wird aus dem Reaktionsgemisch abdestilliert. Die Kondensation kann gegebenenfalls in Gegenwart von Lactonen oder Lactamen von Carbonsäuren mit 4 bis 8 Kohlenstoffatomen vorgenommen werden. Pro mol Dicarbonsäure verwendet man im allgemeinen 0,8 bis 1,4 mol eines Polyalkylenpolyamins. Die so erhältlichen Polyamidoamine weisen primäre und sekundäre NH-Gruppen auf und sind in Wasser löslich.

Die ebenfalls als Komponente (a) geeigneten mit Ethylenimin gepfropften Polyamidoamine sind dadurch herstellbar, daß man Ethylenimin in Gegenwart von Brönstedt- oder Lewis-Säuren, z.B. Schwefelsäure, Phosphorsäure oder Bortrifluoridetherat, auf die oben beschriebenen Polyamidoamine einwirken läßt. Unter den genannten Bedingungen wird Ethylenimin auf das Polyamidoamin aufgepfropft. Z.B. kann man pro basischer Stickstoffgruppierung im Polyamidoamin 1 bis 10 Ethylenimineinheiten aufpfropfen.

Die des weiteren als Komponente (a) einsetzbaren Polyetheramine sind beispielsweise aus der DE-A-29 16 356 bekannt. Die Polyetheramine können durch Kondensation von Di- und Polyaminen mit Chlorhydrinethern bei erhöhten Temperaturen erhalten werden. Die Polyamine können bis zu 10 Stickstoffatome enthalten. Die Chlorhydrinether werden zum Beispiel durch Umsetzung von zweiwertigen C₂-C₅-Alkoholen, den Alkoxylierungsprodukten dieser Alkohole mit bis zu 60 Alkylenoxideinheiten, Glycerin oder Polyglycerin, das bis zu 15 Glycerineinheiten enthält, Erythrit oder Penthaerythrit mit Epichlorhydrin hergestellt. Pro mol eines der genannten Alkohole setzt man mindestens 2 bis 8 mol Epichlorhydrin ein. Die Umsetzung der Di- und Polyamine mit den Chlorhydrinethern wird üblicherweise bei Temperaturen von 110 bis 200°C durchgeführt. Außerdem können die Polyetherpolyamine durch Kondensieren von Diethanolamin oder Triethanolamin nach bekannten Verfahren, wie sie z.B. in den US-A-4 404 362, 4 459 220 und 2 407 895 offenbart sind, hergestellt werden.

Bevorzugte Komponente (a) sind Polyalkylenpolyamine. Besonders bevorzugt sind Polyalkylenpolyamine, insbesondere Polyethylenimine, mit einem mittleren Molekulargewicht M_{w} von 800 bis 2 000 000, vor allem von 20 000 bis 1 000 000 und insbesondere von 20 000 bis 750 000.

Als Komponente (b) sind mindestens bifunktionelle Vernetzer geeignet, die als funktionelle Gruppen eine Halogenhydrin-, Glycidyl-, Aziridin- oder Isocyanat-Einheit oder ein Halogenatom aufweisen.

Geeignete Vernetzer sind z.B. Epihalogenhydrine, bevorzugt Epichlorhydrin, sowie α,ω-Bis(chlorhydrin)polyalkylenglykolether und die daraus durch Behandlung mit Basen erhältlichen α,ω-Bisepoxide von Polyalkylenglykolethern. Die Chlorhydrinether können beispielsweise dadurch hergestellt werden, daß man Polyalkylenglykole und Epichlorhydrin im Molverhältnis 1 : 2 bis 1 : 5 umsetzt. Geeignete Polyalkylenglykole sind z.B. Polyethylenglykole, Polypropylenglykole und Polybutylenglykole sowie Block copolymerisate von C₂-C₄-Alkylenoxiden. Die mittleren Molekulargewichte M_{w} der Polyalkylenglykole betragen im allgemeinen 100 bis 6 000, vorzugsweise 300 bis 2 000. α,ω-Bis(chlorhydrin)polyalkylenglykolether sind z.B. in der US-A-4 144 123 beschrieben. Dort ist auch beschrieben, daß die Bisglycidylether durch Behandlung der entsprechenden Dichlorhydrinether mit Basen zu erhalten sind.

Des weiteren sind als Vernetzer α,ω-Dichlorpolyalkylenglykole geeignet, wie sie z.B. in der EP-A-025 515 offenbart sind. Diese α,ω-Dichlorpolyalkylenglykole sind dadurch erhältlich, daß man zwei- bis vierwertige Alkohole, bevorzugt alkoxyllerte zwei- bis vierwertige Alkohole, entweder mit Thionylchlorid unter HCl-Abspattung und nachfolgender katalytischer Zersetzung der chlorsulfonierten Verbindungen unter Schwefeldioxidabspaltung umsetzt oder mit Phosgen unter HCl-Abspaltung in die entsprechenden Bischlorkohlensäureester überführt und diese anschließend katalytisch unter Kohlendioxidabspaltung zersetzt.

Bei den zwei bis vierwertigen Alkoholen handelt es sich bevorzugt um ethoxylierte und/oder propoxylierte Glykole, die mit 1 bis 100, insbesondere 4 bis 40 mol, Ethylenoxid pro mol Glykol umgesetzt sind.

Außerdem geeignete Vernetzer sind α,ω- oder vicinale Dichloralkane, z.B. 1,2-Dichlorethan, 1,2-Dichlorpropan, 1,3-Dichlorpropan, 1,4-Dichlorbutan und 1,6-Dichlorhexan.

Weitere geeignete Vernetzer sind die Umsetzungsprodukte von mindestens dreiwertigen Alkoholen mit Epichlorhydrin zu Reaktionsprodukten, die mindestens zwei Chlorhydrin-Einheiten aufweisen. Beispielsweise verwendet man als mehrwertige Alkohole Glycerin, ethoxylierte oder propoxylierte Glycerine, Polyglycerine mit 2 bis 15 GlycerinEinheiten im Molekül sowie gegebenenfalls ethoxylierte und/oder propoxylierte Polyglycerine. Vernetzer dieser Art sind z.B. aus der DE-A-29 16 356 bekannt.

Des weiteren sind Vernetzer geeignet, die blockierte Isocyanatgruppen enthalten, z.B. mit 2,2,3,6-Tetramethylpiperidinon-4 blockiertes Trimethylhexamethylendiisocyanat. Diese Vernetzer sind beispielsweise aus der DE-A-40 28 285 bekannt.

Außerdem sind Aziridin-Einheiten enthaltende Vernetzer auf Basis von Polyethern oder substituierten Kohlenwasserstoffen, z.B. 1,6-Bis(N-aziridino)hexan geeignet.

Selbstverständlich können auch Mischungen von zwei oder mehreren Vernetzern eingesetzt werden.

Bevorzugte Komponenten (b) sind Epihalogenhydrine, insbesondere Epichlorhydrin, α,ω-Bis(chlorhydrin)polyalkylenglykolether, α,ω-Bis(epoxide) der Polyalkylenglykolether und Bisglycidylether der Polyalkylenglykole.

Als Komponente (c) dienen Verbindungen, die freie oder derivatisierte Säuregruppen enthalten und ausgewählt sind aus der Gruppe der α,β-ungesättigten Carbonsäuren, ihrer Salze und ihrer hydrolysierbaren Derivate, der Halogencarbonsäuren, ihrer Salze und ihrer hydrolysierbaren Derivate, Glycidylsäure, ihrer Salze und ihrer hydrolysierbaren Derivate, der α,β-ungesättigten Sulfonsäuren, der α,β-ungesättigten Phosphonsäuren und der Carboxyalkylierungsmittel auf Basis von Aldehyden und Alkalimetallcyaniden.

Als Säurederivate eignen sich dabei insbesondere die Ester, Amide und Nitrile, die durch an die Umsetzung mit (a) (und gewünschtenfalls (b)) anschließende Hydrolyse in die freien Carbonsäuren oder ihre Salze überführt werden.

Selbstverständlich können wie bei den Komponenten (a) und (b) auch Mischungen verschiedener Komponenten (c) eingesetzt werden.

Als Komponente (c) geeignete α,β-ungesättigten Carbonsäuren weisen-bevorzugt 3 bis 18 Kohlenstoffatome im Alkenylrest auf. Vorzugsweise handelt es sich um α,β-ungesättigte Monocarbonsäuren und ungesättigte Dicarbonsäuren, die eine Doppelbindung in α-Position zu mindestens einer Carboxylgruppe aufweisen. Beispiele für besonders geeignete Carbonsäuren sind Acrylsäure, Methacrylsäure, Dimethacrylsäure, Ethylacrylsäure, Maleinsäure, Fumarsäure, Methylenmalonsäure, Citraconsäure und Itaconsäure. Bevorzugt sind dabei Acrylsäure, Methacrylsäure und Maleinsäure.

Selbstverständlich können auch Anhydride dieser Säuren, z.B. Maleinsäureanhydrid, zum Einsatz kommen.

Bei den als Komponente (c) geeigneten Salze dieser Carbonsäuren handelt es sich insbesondere um die Alkalimetall-, Erdalkalimetall- und Ammoniumsalze. Bevorzugt sind die Natrium-, Kalium- und Ammoniumsalze. Die Ammoniumsalze können sich sowohl von Ammoniak als auch von Aminen oder Aminderivaten wie Ethanolamin, Diethanolamin und Triethanolamin ableiten. Als Erdalkalimetallsalze kommen vor allem die Magnesium- und Calciumsalze in Betracht.

Als Komponente (c) geeignete Ester der ungesättigten Carbonsäuren leiten sich insbesondere von einwertigen C₁-C₂₀-Alkoholen oder zweiwertigen C₂-C₆-Alkoholen ab.

Beispiele für besonders geeignete Ester sind (Meth)Acrylsäuremethylester, (Meth)-Acrylsäureethylester, (Meth)Acrylsäure-n-propylester, (Meth)Acrylsäureisopropylester, (Meth)Acrylsäure-n-butylester, (Meth)Acrylsäureisobutylester, 2-Ethylhexylacrylat, 2-Ethylhexylmethacrylat, Palmityl(meth)acrylat, Lauryl(meth)acrylat, Stearyl(meth)acrylat, Dimethylmaleinat, Diethylmaleinat, Isopropylmaleinat, 2-Hydroxyethyl(meth)acrylat, 2- und 3-Hydroxypropyl(meth)acrylat, Hydroxybutyl(meth)acrylat und Hydroxyhexyl-(meth)acrylat.

Bei den ebenfalls als Komponente (c) geeigneten Amiden der ungesättigten Carbonsäuren handelt es sich insbesondere um die nicht substituierten Amide, z.B. (Meth)-Acrylamid, es können jedoch auch substituierte Amide eingesetzt werden, die ein oder zwei Substituenten, wie C₁-C₆-Alkyl, am Amidstickstoffatom tragen.

Eine besondere Gruppe der substituierten Amide (c) sind die Umsetzungsprodukte von α,β-ungesättigten Monocarbonsäuren, insbesondere von (Meth)Acrylsäure, mit Amidoalkansulfonsäuren. Besonders geeignet sind hier Amide der Formeln I oder II:

H₂C=CH-X-SO₃H I

H₂C=C(CH₃)-X-SO₃H II

in denen X eine der Spacergruppen -C(O)-NH-[CH₂₋ₙ(CH₃)ₙ]-(CH₂)ₘ-, -C(O)NH- oder -C(O)-NH-[CH(CH₂CH₃)]- bedeutet, wobei n für 0 bis 2 und m für 0 bis 3 steht.

Besonders bevorzugt sind 1-Acrylamido-1-propansulfonsäure (Formel I:
X = -C(O)-NH-[CH(CH₂CH₃)]-), 2-Acrylamido-1-propansulfonsäure (Formel I:
X = -C(O)-NH-[CH(CH₃)]-CH₂-), 2-Acrylamido-2-methyl-1-propansulfonsäure (Formel I:
X = -C(O)-NH-[C(CH₃)₂]-CH₂-) und 2-Methacrylamido-2-methyl-1-propan-sulfonsäure (Formel II: X = -C(O)-NH-[C(CH₃)₂]-CH₂-).

Als Komponente (c) geeignete Nitrile der ungesättigten Carbonsäuren sind schließlich insbesondere Acrylnitril und Methacrylnitril.

Als Komponente (c) sind desweiteren Halogencarbonsäuren, insbesondere Chlorcarbonsäuren, geeignet, die vorzugsweise 2 bis 5 Kohlenstoffatome und bis zu 2 Chloratome enthalten. Besonders geeignete Beispiele sind Chloressigsäure, 2- und 3-Chlorpropionsäure, 2- und 4-Chlorbuttersäure, Dichloressigsäure und 2,2'-Dichlor propionsäure.

Selbstverständlich können anstelle der Halogencarbonsäuren selbst und ihrer Salze auch ihre hydrolysierbaren Derivate, insbesondere ihre Ester, Amide und Nitrile, eingesetzt werden.

Weiterhin als Komponente (c) geeignet sind Glycidylsäure und ihre Salze, vor allem ihre Alkalimetall-, Erdalkalimetall- und Ammoniumsalze, z.B. ihr Natrium-, Kalium-, Magnesium-, Calcium- und Ammoniumsalz.

Selbstverständlich kann die Glycidylsäure auch in derivatisierter Form eingesetzt wer den, insbesondere als Amid oder Ester, vor allem C₁-C₄-Alkyl- oder C₂-C₄-Hydroxyalkylester, z.B. Glycidylsäuremethylester, Glycidylsäureethylester, Glycidylsäure-n-propylester, Glycidylsäure-n-butylester, Glycidylsäureisobutylester, Glycidylsäure-2-ethylhexylester, Glycidylsäure-2-hydroxypropylester und Glycidylsäure-4-hydroxybutylester.

Bevorzugt sind Glycidylsäure, ihre Natrium-, Kalium- und Ammoniumsalze sowie Glycidylsäureamid.

Ebenfalls als Komponente (c) geeignet sind α,β-ungesättigte Sulfonsäuren, wie Vinylsulfonsäure.

Schließlich sind als Komponente (c) auch α,β-ungesättigte Phosphonsäuren, wie Vinylphosphonsäure, geeignet.

Außerdem eignen sich als Komponente (c) auch Carboxyalkylierungsmittel auf Basis von Aldehyden und Alkalimetallcyaniden. Dabei kann es sich um Gemische dieser Verbindungen selbst oder um Cyanhydrine als deren Umsetzungsprodukte, z.B. Glykolnitrit, handeln.

Als Aldehyde eignen sich dabei z.B. aliphatische Aldehyde, insbesondere Alkanale mit 1 bis 10 Kohlenstoffatomen, wie Acetaldehyd und vor allem Formaldehyd, und aromatische Aldehyde, wie Benzaldehyd.

Geeignete Alkalimetallcyanide sind insbesondere Kaliumcyanid und vor allem Natriumcyanid.

Als Komponente (c) bevorzugt sind monoethylenisch ungesättigte Carbonsäuren, insbesondere Acrylsäure, Methacrylsäure und Maleinsäure, wobei Acrylsäure besonders bevorzugt ist.

Die auf den vorstehend genannten Komponenten (c) basierenden Polymere können nach allgemein bekannten Verfahren hergestellt werden. Geeignete Herstellungsverfahren für Polymere, die auf Carbonsäuren, Chlorcarbonsäuren und Glycidylsäure sowie deren Derivaten (c) basieren, sind z.B. in der DE-A-42 44 194 beschrieben, wonach entweder die Komponente (a) zunächst mit der Komponente (c) zur Reaktion gebracht wird und erst danach die Komponente (b) zugesetzt wird oder die Komponenten (c) und (b) gleichzeitig mit der Komponente (a) umgesetzt werden.

Bevorzugt werden die erfindungsgemäßen Polymere jedoch hergestellt, indem die Komponente (a) zunächst mit der Komponente (b) anvemetzt (Schritt i)) und dann mit der Komponente (c) umgesetzt wird (Schritt ii)).

Die Vernetzung (Schritt i)) kann nach bekannten Verfahren vorgenommen werden. Üblicherweise wird der Vernetzer (b) als wäßrige Lösung eingesetzt, so daß die Umsetzung in wäßriger Lösung erfolgt. Die Reaktionstemperatur liegt in der Regel bei 10 bis 200°C, bevorzugt bei 30 bis 100°C. Die Umsetzung wird üblicherweise bei Normaldruck durchgeführt. Die Reaktionszeiten hängen von den eingesetzten Komponenten (a) und (b) ab und betragen im allgemeinen 0,5 bis 20 h, insbesondere 1 bis 10 h. Das erhaltene Produkt kann isoliert oder vorzugsweise direkt in Form der anfallenden Lösung in Schritt ii) umgesetzt werden.

In Schritt ii) erfolgt die Umsetzung des in Schritt i) erhaltenen Produktes mit denjenigen Verbindungen der Gruppe (c), die eine monoethylenisch ungesättigte Doppelbindung enthalten, nach Art einer Michael-Addition, während Halogencarbonsäuren und Glycidylsäure bzw. die Derivate dieser Säuren über das Halogenatom oder die Epoxidgruppe mit den primären oder sekundären Aminogruppen des in Schritt i) erhaltenen anvernetzten Produktes reagieren. Die Umsetzung erfolgt üblicherweise in wäßriger Lösung bei 10 bis 200°C, bevorzugt bei 30 bis 100°C, und unter Normaldruck. Die Reaktionsdauer ist abhängig von den eingesetzten Komponenten und beträgt in der Regel 5 bis 100 h, vor allem 1 bis 50 h.

Wurden die oben genannten Säurekomponenten (c) in derivatisierter Form eingesetzt, so werden die derivatisierten Säuregruppen in einem zusätzlichen Hydrolyseschritt (iii) in die freien Säuregruppen bzw. ihre Salze überführt.

Die Carboxyalkylierung mit Aldehyden und Alkalimetallcyaniden in Schritt ii) kann ebenfalls nach bekannten und z.B. in der WO-A-97/40087 für die Carboxymethylierung beschriebenen Verfahren kontinuierlich, diskontinuierlich oder semikontinuierlich erfolgen.

Verfahrenstechnisch geht man vorzugsweise so vor, daß man Aldehyd und Alkalimetallcyanid einer wäßrigen Lösung des anvernetzten, Aminogruppen enthaltenen Polymers gleichzeitig in 0,5 bis 10 h zuführt, wobei ein geringer Überschuß an Alkalimetallcyanid im Reaktionsgemisch bevorzugt ist. Daher legt man vorzugsweise einen geringe Menge an Alkalimetallcyanid in der Polymerlösung vor, z.B. 2 bis 10 mol-%, bezogen auf die aktiven N-H-Bindungen, und gibt Aldehyd und Alkalimetallcyanid in einem Molverhältnis von etwa 1 : 1 entweder getrennt voneinander oder als Mischung zu.

Für eine vollständige Carboxyalkylierung werden pro mol zu carboxyalkylierender NH-Gruppe 1 mol Aldehyd und 1 mol Alkalimetallcyanid benötigt. Bevorzugt ist jedoch ein Carboxyalkylierungsgrad von 20 bis 95%, insbesondere von bis zu 85%. Dementsprechend werden Aldehyd und Alkalimetallcyanid im Unterschuß eingesetzt. Bevorzugte Mengen betragen 0,2 bis 0,95 mol, insbesondere bis zu 0,85 mol, Aldehyd und 0,2 bis 0,95 mol, vor allem bis zu 0,85 mol, Alkalimetallcyanid je mol aktiver N-H-Gruppen.

Die amphoteren Polymere erhöhen die Benetzbarkeit von harten Oberflächen mit polaren organischen Lösungsmitteln oder diese Lösungsmittel enthaltenden flüssigen Formulierungen und stabilisieren die bei der Benetzung auf den Oberflächen gebildeten Flüssigkeitsfilme.

Bei den polaren Lösungsmitteln kann es sich um protische Lösungsmittel, wie Alkohole und Carbonsäuren, und um aprotische Lösungsmittel, wie Carbonsäureamide, Carbonsäureester, Ketone und Dimethylsulfoxid, handeln.

Aus diesen Lösungsmittelklassen seien im einzelnen beispielhaft genannt:
- Alkohole:
   einwertige Alkohole, insbesondere C₁-C₁₀-Alkanole, z.B. Methanol, Ethanol, n-Propanol, Isopropanol, Isobutanol, tert.-Butanol, 1-Hexanol, Cyclohexanol und Phenol;
   mehrwertige Alkohole, insbesondere zwei- und dreiwertige Alkohole, wie C₂-C₄-Alkylenglykole und deren Oligo- und Polymere, z.B. Ethylenglykol, 1,2- und 1,3-Propylenglykol, 1,2- und 1,4-Butylenglykol, Diethylenglykol, Dipropylenglykol, Polyethylenglykol und Glycerin;
- Carbonsäuren:
   gesättigte aliphatische Carbonsäuren, insbesondere gesättigte C₁- C₁₀-Carbonsäuren, z.B. Essigsäure und Propionsäure;
   ungesättigte aliphatische Carbonsäuren, insbesondere ungesättigte C₃-C₁₀-Carbonsäuren, z.B. Acrylsäure;
- Carbonsäureamide:
   Amide von gesättigten aliphatischen Carbonsäuren, insbesondere von C₁-C₁₀-Carbonsäuren, z.B. Formamid und Acetamid;
   cyclische gesättigte Amide, z.B. Pyrrolidon und N-C₁-C₂-Alkylpyrrolidone, wie N-Methylpyrrolidon;
- Carbonsäureester.
   Alkylester von gesättigten aliphatischen Carbonsäuren, insbesondere C₁-C₆-Alkylester von gesättigten C₂-C₆-Carbonsäuren, z.B. Essigsäureethylester;
   Alkylester von ungesättigten aliphatischen Carbonsäuren, insbesondere C₁-C₁₀-Alkylester von ungesättigten C₃-C₁₀-Carbonsäuren, z.B. Butylacrylat;
- Ketone:
   aliphatische Ketone, insbesondere C₃-C₁₀-Ketone, z.B. Aceton und Ethylmethylketon;
   cycloaliphatische Ketone, insbesondere cyclische C₄-C₁₀-Ketone, z.B. Cyclohexanon.

Besondere Bedeutung haben die amphoteren Polymere für die Erhöhung der Benetzbarkeit mit protischen Lösungsmitteln und Mischungen dieser Lösungsmittel mit Wasser sowie Formulierungen, die auf diesen Lösungsmitteln oder Mischungen dieser Lösungsmittel mit Wasser basieren.

Besonders vorteilhaft können sie bei der Entweisung von Verkehrsmitteln aller Art, insbesondere von Flugzeugen, Autos und Zügen, eingesetzt werden, da sie die Benetzbarkeit dieser Verkehrsmittel, z.B. der Flugzeugtragflächen und der Sichtscheiben, mit Enteisungsmitteln erhöhen.

Beispiele für weitere Anwendungsfelder sind der Korrosionsschutz sowie die Reinigung und Vorbehandlung von Oberflächen für eine Beschichtung.

Die amphoteren Polymere können grundsätzlich zur Behandlung aller Arten von harten Oberflächen, insbesondere von glatten Oberflächen, verwendet werden. Beispielhaft seien lackierte Metall- und Kunststoffoberflächen, Oberflächen aus Glas, Metall, z.B. Edelstahl, Emaille und Kunststoff und Keramik genannt.

Die Behandlung der harten Oberflächen erfolgt durch Inkontaktbringen der amphoteren Polymere mit der harten Oberfläche, was durch Spülen, Besprühen, Wischen, Tauchen oder andere dem Fachmann bekannte Verfahren geschehen kann.

Die amphoteren Polymere werden dabei vorzugsweise in Form von Lösungen/Dispersionen in Wasser, Alkoholen oder Wasser/Alkohol-Gemischen eingesetzt. Der Polymergehalt dieser Lösungen/Dispersionen beträgt in der Regel 0,01 bis 10 Gew.-%, insbesondere 0,1 bis 2 Gew.-%.

Es ist jedoch auch möglich, sie direkt in die Formulierungen, z.B. die Enteisungsmittel, einzubringen, die auf die harten Oberflächen aufgebracht werden sollen.

### Beispiele

### A) Herstellung von amphoteren Polymeren

### Polymer P1

In einem Vierhalskolben mit Metallrührer und Rückflußkühler wurden 196 g wasserfreies Polyethylenimin (mittleres Molekulargewicht M_{w} 25 000) unter Stickstoffatmosphäre vorgelegt und mit 588 g destilliertem Wasser auf 25 Gew.-% verdünnt. Nach Erhitzen auf 70°C unter Rühren wurden bei dieser Temperatur 40 ml einer 22 gew.-%igen wäßrigen Lösung eines Umsetzungsproduktes von Polyethylenglykol (mittleres Molekulargewicht M_{w} 1500) mit 2 Äquivalenten Epichlorhydrin in 5 min zugegeben. Nach fünfstündigem Nachrühren bei 70°C und anschließendem Erhitzen auf 80°C wurden 263,2 g Acrylsäure in 3 h bei dieser Temperatur zugetropft. Nach einstündigem Nachrühren bei 80°C wurde die Reaktionsmischung auf Zimmertemperatur abgekühlt.

Es wurde eine viskose, gelb-orangefarbene Lösung des Polymers P1 mit einem Feststoffgehalt von 42 Gew.-% (2 h, Vakuum/120°C) und einem K-Wert von 17 (bestimmt nach Fikentscher in 1 gew.-%iger wäßriger Lösung bei 23°C) erhalten.

### Polymer P2

In einem Vierhalskolben mit Metallrührer und Rückflußkühler wurden 350 g einer 56 gew.-%igen wäßrigen Lösung von Polyethylenimin (mittleres Molekulargewicht M_{w} 25 000) unter Stickstoffatmosphäre vorgelegt und mit 456 g destilliertem Wasser auf 24 Gew.-% verdünnt. Nach Erhitzen auf 80°C unter Rühren wurden 259,4 g Acrylsäure in 3 h bei dieser Temperatur zugetropft. Nach sechsstündigem Nachrühren bei 80°C wurde die Reaktionsmischung auf Zimmertemperatur abgekühlt.

Es wurde eine viskose, gelb-orangefarbene Lösung des Polymers P2 mit einem Feststoffgehalt von 43,2 Gew.-% (2 h, Vakuum/120°C) und einem K-Wert von 14,9 (bestimmt nach Fikentscher in 1 gew.-%iger wäßriger Lösung bei 23°C) erhalten.

### Polymer P3

In einem Vierhalskolben mit Metallrührer und Rückflußkühler wurden 350 g einer 56 gew.-%igen wäßrigen Lösung von Polyethylenimin (mittleres Molekulargewicht M_{w} 25 000) unter Stickstoffatmosphäre vorgelegt und mit 456 g destilliertem Wasser auf 24 Gew.-% verdünnt. Nach Erhitzen auf 70°C unter Rühren auf 70°C wurden 18 ml einer 50 gew.-%igen wäßrigen Lösung eines Umsetzungsproduktes von Polyethylenglykol (mittleres Molekulargewicht M_{w} 660) mit 2 Äquivalenten Epichlorhydrin in 5 min bei dieser Temperatur zugegeben. Nach fünfstündigem Nachrühren bei 70°C und anschließendem Erhitzen auf 80°C wurden 259,4 g Acrylsäure in 3 h bei dieser Temperatur zugetropft. Nach einstündigem Nachrühren bei 95°C wurde die Reaktionsmischung auf Zimmertemperatur abgekühlt.

Es wurde eine viskose, gelb-orangefarbene Lösung des Polymers P3 mit einem Feststoffgehalt von 44,1 Gew.-% (2 h, Vakuum/120°C) und einem K-Wert von 23,1 (bestimmt nach Fikentscher in 1 gew.-%iger wäßriger Lösung bei 23°C) erhalten.

### B) Anwendung von amphoteren Polymeren

### Beispiel 1

Auf eine Edelstahlplatte (10 cm x 10 cm) wurden 3 g einer 0,5 gew.-%igen wäßrigen Lösung des jeweiligen Polymers aufgetragen und mit einem Kimtex^{®} Lite Wischtuch (Fa. Kimberly-Clark) gleichmäßig verteilt. Nach Trocknung wurde die behandelte Platte mit 5 ml Ethylenglykol besprüht.

Zum Vergleich wurde eine unbehandelte Edelstahlplatte mit der gleichen Menge Ethylenglykol besprüht.

Auf den mit dem Polymeren P1, P2 oder P3 behandelten Edelstahlplatten bildete sich ein gleichmäßiger, lückenloser Film aus Ethylenglykol. Im Gegensatz dazu verteilte sich das Ethylenglykol auf der unbehandelten Edelstahlplatte nur unregelmäßig und sehr lückenhaft.

### Beispiel 2

Auf eine glänzende weiße Keramikfliese (10 cm x 15 cm; Fa. Novoker) wurden 0,3 g einer 0,5 gew.-%igen wäßrigen Lösung des Polymers P1 aufgetragen und mit einem Kimtex Lite Wischtuch (Fa. Kimberly-Clark) gleichmäßig verteilt. Nach Trocknung wurde die Benetzbarkeit der behandelten Fliese mit verschiedenen organischen Lösungsmitteln untersucht.

Dazu wurde das jeweilige Lösungsmittel bei 23°C in Form eines Tropfens auf die Fliese aufgebracht und der sich jeweils ergebende Kontaktwinkel mit einem Gerät Dataphysics Contact Angle System OCA 15+ mit der Software SCA 20.2.0 (November 2002) bestimmt.

Der Kontaktwinkel ist ein Maß für die Benetzbarkeit der Oberfläche. Je kleiner dieser Winkel ist, umso besser ist die Benetzbarkeit.

Die erhaltenen Meßergebnisse sind in der folgenden Tabelle zusammengestellt. Zum Vergleich sind die bei Verwendung einer unbehandelten Keramikfliese erhaltenen Meßergebnisse mitaufgeführt.

**Tabelle**

| Lösungsmittel | Kontaktwinkel [°] | |
|---|---|---|
| | behandelte Fliese | unbehandelte Fliese |
| Ethylenglykol | 9,7 ± 0,9 | 12,0 ±1,0 |
| Formamid | 5,2 ± 0,5 | 9,2 ± 0,8 |

## Patentansprüche

1. Verwendung von amphoteren Polymeren zur Behandlung von harten Oberflächen zur Verbessung ihrer Benetzbarkeit mit polaren organischen Lösungsmitteln oder diese Lösungsmittel enthaltenden flüssigen Formulierungen.

2. Verwendung nach Anspruch 1, **dadurch gekennzeichnet, daß** man Polymere einsetzt, die protonierbare oder quaternisierte Stickstoffatome und anionische Gruppen enthalten.

3. Verwendung nach Anspruch 1 oder 2, **dadurch gekennzeichnet, daß** man Polymere auf Basis anionisch modifizierter Polyamine einsetzt.

4. Verwendung nach den Ansprüchen 1 bis 3, **dadurch gekennzeichnet, daß** man wasserlösliche oder wasserdispergierbare Polymere einsetzt, die erhältlich sind durch Umsetzung von
(a) Verbindungen, ausgewählt aus der Gruppe der Polyalkylenpolyamine, Polyamidoamine, mit Ethylenimin gepfropften Polyamidoamine und Polyetheramine,
(b) gewünschtenfalls mindestens bifunktionellen Vernetzern
und
(c) freie oder derivatisierte Säuregruppen enthaltenden Verbindungen, ausgewählt aus der Gruppe der α,β-ungesättigten Carbonsäuren, ihrer Salze und ihrer hydrolysierbaren Derivate, der Halogencarbonsäuren, ihrer Salze und ihrer hydrolysierbaren Derivate, Glycidylsäure, ihrer Salze und ihrer hydrolysierbaren Derivate, der α,β-ungesättigten Sulfonsäuren, der α,β-ungesättigten Phosphonsäuren und der Carboxyalkylierungsmittel auf Basis von Aldehyden und Alkalimetallcyaniden,
und Hydrolyse von in derivatisierter Form vorliegenden Säuregruppen zu freien oder als Salz vorliegende Säuregruppen.

5. Verwendung nach Anspruch 4, **dadurch gekennzeichnet, daß** man Polymere einsetzt, bei denen die Komponente (a) ein Polyalkylenimin ist.

6. Verwendung nach Anspruch 4 oder 5, **dadurch gekennzeichnet, daß** man Polymere einsetzt, bei denen die Komponente (c) eine α,β-ungesättigte Carbonsäure ist.

7. Verwendung nach den Ansprüchen 4 bis 6, **dadurch gekennzeichnet, daß** man Polymere einsetzt, bei denen bis zu 2% der in der in der Komponente (a) enthaltenen aktiven N-H-Bindungen mit einem Vernetzer (b) umgesetzt sind.

8. Verwendung nach den Ansprüchen 1 bis 7, **dadurch gekennzeichnet, daß** die Benetzbarkeit mit flüssigen Formulierungen auf Basis von protischen organischen Lösungsmitteln verbessert wird.

9. Verwendung nach den Ansprüchen 1 bis 8, **dadurch gekennzeichnet, daß** die Benetzbarkeit mit Enteisungsmitteln verbessert wird.

## Claims

1. The use of amphoteric polymers for the treatment of hard surfaces for improving their wettability with polar organic solvents or liquid formulations comprising these solvents.

2. The use according to claim 1, wherein polymers are used which comprise protonatable or quaternized nitrogen atoms and anionic groups.

3. The use according to claim 1 or 2, wherein polymers based on anionically modified polyamines are used.

4. The use according to claims 1 to 3, wherein watersoluble or water-dispersible polymers are used which are obtainable by reacting
(a) compounds chosen from the group of polyalkylene polyamines, polyamidoamines, polyamidoamines grafted with ethyleneimine and polyether amines,
(b) if desired at least bifunctional crosslinkers
and
(c) compounds comprising free or derivatized acid groups, chosen from the group of α,β-unsaturated carboxylic acids, their salts and their hydrolyzable derivatives, halocarboxylic acids, their salts and their hydrolyzable derivatives, glycidic acid, its salts and its hydrolyzable derivatives, α,β-unsaturated sulfonic acids, α,β-unsaturated phosphonic acids and carboxyalkylating agents based on aldehydes and alkali metal cyanides,
and hydrolysis of acid groups present in derivatized form to give acid groups which are free or present in salt form.

5. The use according to claim 4, wherein polymers are used in which the component (a) is a polyalkyleneimine.

6. The use according to claim 4 or 5, wherein polymers are used in which the component (c) is an α,β-unsaturated carboxylic acid.

7. The use according to claims 4 to 6, wherein polymers are used in which up to 2% of the active N-H bonds present in the component (a) have been reacted with a crosslinker (b).

8. The use according to claims 1 to 7, wherein the wettability is improved with liquid formulations based on protic organic solvents.

9. The use according to claims 1 to 8, wherein the wettability is improved with deicers.

## Revendications

1. Utilisation de polymères amphotères pour le traitement de surfaces dures, afin d'améliorer leur mouillabilité, par des solvants organiques polaires ou des compositions liquides contenant ces solvants.

2. Utilisation selon la revendication 1, **caractérisée en ce qu'**on utilise des polymères qui contiennent des groupes anioniques et des atomes d'azote protonables ou rendus quaternaires.

3. Utilisation selon la revendication 1 ou 2,
**caractérisée en ce qu'**on utilise des polymères à base de polyamines à modification anionique.

4. Utilisation selon les revendications 1 à 3,
**caractérisée en ce qu'**on utilise des polymères solubles dans l'eau ou dispersables dans l'eau, qui peuvent être obtenus par mise en réaction
(a) de composés choisis dans le groupe des polyalkylène-polyamines, des polyamido-amines, des polyamido-amines greffées avec de l'éthylène-imine et des polyétheramines,
(b) si on le désire, d'agents de réticulation éventuellement au moins bifonctionnels
et
(c) de composés contenant des groupes acide libres ou fonctionnalisés, choisis dans le groupe des acides carboxyliques α,β-insaturés, de leurs sels et leurs dérivés hydrolysables, des acides halogéno-carboxyliques, de leurs sels et leurs dérivés hydrolysables, d'acide glycidylique, de ses sels et ses dérivés hydrolysables, des acides sulfoniques α,β-insaturés, des acides phosphoniques α,β-insaturés et des agents de carboxyalkylation à base d'aldéhydes et de cyanures de métaux alcalins,
et hydrolyse des groupes acides se trouvant sous forme fonctionnalisée, en groupes acides libres ou se trouvant sous forme de sel.

5. Utilisation selon la revendication 4, **caractérisée en ce qu'**on utilise des polymères dont le composant (a) est une polyalkylène-imine.

6. Utilisation selon la revendication 4 ou 5,
**caractérisée en ce qu'**on utilise des polymères dont le composant (c) est un acide carboxylique α,β-insaturé.

7. Utilisation selon les revendications 4 à 6,
**caractérisée en ce qu'**on utilise des polymères dans lesquels jusqu'à 2 % des liaisons N-H actives contenues dans le composant (a) ont réagi avec un agent de réticulation (b).

8. Utilisation selon les revendications 1 à 7,
**caractérisée en ce que** la mouillabilité par des compositions liquides à base de solvants organiques protiques est améliorée.

9. Utilisation selon les revendications 1 à 8,
**caractérisée en ce que** la mouillabilité est améliorée par des agents de dégivrage.
